(19) Europäisches Patentamt
European Patent Office
Office européen des brevets

(11) **EP 4 756 369 A1**

(12) **EUROPEAN PATENT APPLICATION**
published in accordance with Art. 153(4) EPC

(43) Date of publication:
**10.06.2026 Bulletin 2026/24**

(21) Application number: **23947288.9**

(22) Date of filing: **18.10.2023**

(51) International Patent Classification (IPC):
**G01C 15/00** (2006.01)   **G01C 21/16** (2006.01)
**G01C 21/00** (2006.01)   **G01S 17/08** (2006.01)
**G01S 7/48** (2006.01)   **G01S 7/481** (2006.01)
**G01B 11/00** (2006.01)

(86) International application number:
**PCT/CN2023/125169**

(87) International publication number:
**WO 2025/025349 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2023 CN 202310946196**

(71) Applicants:
• **Qinnav Technology Ltd.**
**Jiading District**
**Shanghai 201801 (CN)**

• **Comnav Technology Ltd.**
**Shanghai 201801 (CN)**

(72) Inventors:
• **FENG, Yi**
**Shanghai 201801 (CN)**
• **WANG, Yunpeng**
**Shanghai 201801 (CN)**
• **ZHANG, Meng**
**Shanghai 201801 (CN)**
• **ZHANG, Lu**
**Shanghai 201801 (CN)**

(74) Representative: **De Vries & Metman**
**Overschiestraat 180**
**1062 XK Amsterdam (NL)**

(54) **MEASUREMENT METHOD AND SYSTEM, DEVICE, AND STORAGE MEDIUM**

(57)   The present disclosure provides a measurement method and system, a device, and a storage medium. The method is implemented by using the measurement system. The measurement system comprises a laser ranging module, an image measurement module, and a navigation module. The method comprises the following steps: acquiring measurement data of a point to be measured, the measurement data comprising first measurement data acquired from the laser ranging module, second measurement data acquired from the image measurement module, and third measurement data acquired from the navigation module; on the basis of the measurement data of said point, calculating at least one position measurement result of said point; and on the basis of the at least one position measurement result, calculating a final position measurement result of said point by using a preset measurement fusion algorithm. In the present disclosure, the measurement data of the laser ranging module, the image measurement module, and the navigation module are effectively fused, so that the accuracy of measurement of the spatial position of a point to be measured is improved.

Acquire measurement data of a point to be measured, the measurement data comprising first measurement data acquired from a laser ranging module, second measurement data acquired from an image measurement module, and third measurement data acquired from a navigation module — S100

On the basis of the measurement data of said point, calculate at least one position measurement result of said point — S200

On the basis of the at least one position measurement result, calculate a final position measurement result of said point by using a preset measurement fusion algorithm — S300

FIG. 1

EP 4 756 369 A1

## Description

## TECHNICAL FIELD

The present disclosure relates to the technical field of data processing, in particular to a measurement method and system, device and storage medium.

## BACKGROUND

In the field of high-precision measurement and mapping, an inertial navigation RTK (Real Time Kinematic) receiver is used to measure three-dimensional spatial points. For an RTK receiver relying on a centering rod, the measurement range is often limited due to the length restriction of the centering rod; moreover, measurement results cannot even be obtained when measurement operators are unable to reach the vicinity of the measurement point. A laser RTK receiver that uses a laser ranging module instead of the centering rod is no longer limited by the length of the centering rod and realizes non-contact measurement of target points. However, the measurement accuracy is easily affected by factors such as light intensity, receiver tilt angle and operator jitter, resulting in substantial discrepancies in measurement accuracy.

It should be noted that the information disclosed in the above background art section is only used to enhance the understanding of the background of the present disclosure, and thus may include information that does not constitute the prior art known to those skilled in the art.

## SUMMARY

To solve the problems in the prior art, the objective of the present disclosure is to provide a measurement method and system, a device and a storage medium, which effectively improve the position measurement accuracy of spatial points through data fusion of multi-source sensors.

An embodiment of the present disclosure provides a measurement method implemented with a measurement system, the measurement system includes a laser ranging module, an image measurement module and a navigation module. The method includes the following steps:

acquiring measurement data of a point to be measured, the measurement data including first measurement data acquired from the laser ranging module, second measurement data acquired from the image measurement module, and third measurement data acquired from the navigation module;

calculating at least one position measurement result of the point to be measured based on the measurement data of the point to be measured;

calculating a final position measurement result of the point to be measured based on the at least one position measurement result by using a preset measurement fusion algorithm.

In some embodiments, the step of acquiring the measurement data of the point to be measured includes the following steps:

acquiring navigation information of the measurement system at a plurality of moments from the navigation module;

setting a plurality of shooting positions, and at each of the shooting positions, acquiring distance information and captured images at corresponding moments from the laser ranging module and the image measurement module respectively; wherein the distance information at the plurality of moments serves as the first measurement data, and the captured images at the plurality of moments serve as the second measurement data;

determining a plurality of timestamps corresponding to the first measurement data and the second measurement data;

acquiring a plurality of pieces of navigation information at corresponding moments from the navigation module according to the plurality of timestamps of the first measurement data and the second measurement data, wherein the navigation information serves as the third measurement data.

In some embodiments, the step of acquiring the distance information and the captured images at the corresponding moments from the image measurement module and the laser ranging module respectively includes the following steps:

at each of the shooting positions, controlling the laser ranging module to emit laser light to irradiate the point to be measured;

based on a trigger command, acquiring the distance information from the laser ranging module and collecting an image of the point to be measured through the image measurement module at the same moment.

In some embodiments, the step of calculating the at least one position measurement result of the point to be measured based on the measurement data of the point to be measured includes the following steps:

calculating at least one first position measurement result based on the first measurement data and the third measurement data;

calculating at least one second position measurement result based on the second measurement data and the third measurement data.

In some embodiments, the navigation module includes an IMU sensor and a navigation unit, and the navigation information includes three-dimensional position information and attitude information of the IMU sensor;

wherein the step of calculating the at least one first position measurement result based on the first measurement data and the third measurement data includes the following steps:

> the navigation module includes an IMU sensor and a navigation unit, and the navigation information includes three-dimensional position information and attitude information of the IMU sensor;
>
> wherein the step of calculating the at least one first position measurement result based on the first measurement data and the third measurement data includes the following steps:
>
> determining three-dimensional coordinates $r_{IMU}^n$ of the IMU sensor in a geodetic coordinate system according to the three-dimensional position information of the IMU sensor;
>
> acquiring coordinate conversion parameters $D^{-1}$ between a current navigation coordinate system and the geodetic coordinate system;
>
> determining coordinate conversion parameters $C_b^n$ from a carrier coordinate system of the IMU sensor to the current navigation coordinate system according to the attitude information of the IMU sensor;
>
> acquiring a projection coordinate $l_1^b$ of a position vector pointing from a center of the IMU sensor to a laser emission point in the carrier coordinate system;
>
> determining a projection coordinate $l_2^b$ of a position vector pointing from the laser emission point to the point to be measured in the IMU carrier coordinate system according to the distance information;
>
> calculating to obtain the first position measurement result.

In some embodiments, the step of calculating the at least one second position measurement result based on the second measurement data and the third measurement data includes the following steps:

> selecting a captured image at one moment as a reference image, and taking a camera coordinate system at a moment corresponding to a timestamp of the reference image as a reference coordinate system;
>
> acquiring coordinate conversion parameters between the reference coordinate system and the geodetic coordinate system, according to the navigation information corresponding to the timestamp of the reference image;
>
> acquiring coordinate conversion parameters between camera coordinate systems at moments corresponding to timestamps of other captured images except the reference image and the reference coordinate system, according to navigation information corresponding to timestamps of the other captured images except the reference image and navigation information corresponding to the timestamp of the reference image;

extracting plane pixel coordinates of laser irradiation points in the plurality of captured images;

calculating three-dimensional coordinates of the point to be measured in the reference coordinate system, based on the plane pixel coordinates of the laser irradiation points in the plurality of captured images and the coordinate conversion parameters between the camera coordinate systems at the moments corresponding to the timestamps of the captured images and the reference coordinate system;

determining second measured three-dimensional coordinates of the point to be measured in the geodetic coordinate system as the second position measurement result, according to the coordinate conversion parameters between the reference coordinate system and the geodetic coordinate system and the three-dimensional coordinates of the point to be measured in the reference coordinate system.

In some embodiments, the navigation module includes an IMU sensor and a navigation unit, and the navigation information includes three-dimensional position information and attitude information of the IMU sensor;

> the step of acquiring the coordinate conversion parameters between the reference coordinate system and the geodetic coordinate system, according to the navigation information corresponding to the timestamp of the reference image includes the following steps:
>
> acquiring coordinate conversion parameters between a carrier coordinate system of the IMU sensor and a camera coordinate system of the image measurement module;
>
> determining the coordinate conversion parameters between the reference coordinate system and the geodetic coordinate system, based on three-dimensional position information and attitude information of the IMU sensor at the moment corresponding to the timestamp of the reference image.

In some embodiments, the step of calculating the three-dimensional coordinates of the point to be measured in the reference coordinate system, based on the plane pixel coordinates of the laser irradiation points in the plurality of captured images and the coordinate conversion parameters between the camera coordinate systems at the moments corresponding to the timestamps of the captured images and the reference coordinate system includes the following steps:

for each of the captured images, calculating first three-dimensional coordinates of the point to be measured corresponding to the captured image in the reference coordinate system respectively, based on the plane pixel coordinates of the laser irradiation point in the captured image and the coordinate conversion parameters between the camera coordinate system at the moment corresponding to the timestamp of the captured image and the reference coordinate system;

determining the three-dimensional coordinates of the point to be measured in the reference coordinate system based on a plurality of first three-dimensional coordinates by using a triangulation method or constructing a three-dimensional point cloud.

In some embodiments, after the step of calculating the at least one position measurement result of the point to be measured based on the measurement data of the point to be measured and before the step of calculating the second position measurement result based on the second measurement data and the third measurement data, the method further includes the following steps:

judging whether a distance between the point to be measured and the measurement system is greater than or equal to a preset distance threshold according to the first measurement data;

if yes, calculating at least one second position measurement result based on the second measurement data and the third measurement data;

if not, refraining from calculating the second position measurement result.

In some embodiments, the step of calculating the at least one second position measurement result based on the second measurement data and the third measurement data includes the following steps:

screening the captured images in the second measurement data, and eliminating captured images with a quality failing to meet preset image quality requirements;

calculating the second position measurement result based on non-eliminated captured images and the navigation information at corresponding moments in the third measurement data.

In some embodiments, the step of calculating the final position measurement result of the point to be measured based on the at least one position measurement result by using the preset measurement fusion algorithm includes the following steps:

performing weighted fusion on first position measurement results corresponding to the plurality of moments based on set first weights to obtain a fused first position measurement result;

performing weighted fusion on the fused first position measurement result and the second position measurement result based on set second weights to obtain the final position measurement result of the point to be measured.

In some embodiments, the first position measurement results corresponding to the plurality of moments are subjected to weighted fusion based on the set first weights.

In some embodiments, the method further includes the following step:

setting the second weights of the fused first position measurement result and the second position measurement result according to image quality of the captured images corresponding to the second position measurement result.

An embodiment of the present disclosure further provides a measurement system configured to implement the measurement method, wherein the system including:

a laser ranging module, an image measurement module, and a navigation module;

a control module configured to acquire measurement data of a point to be measured, the measurement data including first measurement data acquired from the laser ranging module, second measurement data acquired from the image measurement module, and third measurement data acquired from the navigation module; calculate at least one position measurement result of the point to be measured based on the measurement data of the point to be measured; and calculate a final position measurement result of the point to be measured based on the at least one position measurement result by using a preset measurement fusion algorithm.

An embodiment of the present disclosure further provides a measurement device including:

a housing;

a laser ranging module provided on the housing;

an image measurement module provided on the housing, wherein a shooting direction of the image measurement module is consistent with a laser emission direction of the laser ranging module;

a navigation module, at least part of which is provided inside the housing, and an antenna of the navigation module is provided outside the housing;

a control module provided inside the housing and configured to execute the steps of the measurement method.

An embodiment of the present disclosure further provides a computer-readable storage medium for storing a program, wherein the program implements the steps of the aforementioned measurement method when executed by a processor.

It should be understood that the foregoing general description and the following detailed description are merely exemplary and explanatory and are not intended to limit the present disclosure.

The measurement method and system, the device and the storage medium of the present disclosure have the following beneficial effects.

The present disclosure provides a new method for measuring the position of a spatial point to be measured, which is implemented with a measurement system integrated with a laser ranging module, an image measurement module and a navigation module. Through fusion processing of multi-source measurement data, the position measurement accuracy of the points to be measured at different distances is improved, the impact of factors such as light intensity, measurement equipment tilt angle and operator jitter during the measurement process is reduced, and the stability of measurement accuracy is ensured.

## BRIEF DESCRIPTION OF THE DRAWINGS

Other features, objectives and advantages of the present disclosure will become more apparent upon reading the detailed description of the non-limiting embodiments with reference to the accompanying drawings below.

FIG. 1 is a flow chart of a measurement method according to an embodiment of the present disclosure.
FIG. 2 is a schematic structural view of a measurement system according to an embodiment of the present disclosure.
FIG. 3 is a front view of a measurement device according to an embodiment of the present disclosure.
FIG. 4 is a bottom view of a measurement device according to an embodiment of the present disclosure.
FIG. 5 is a flow chart of acquiring measurement data of a point to be measured according to an embodiment of the present disclosure.
FIG. 6 is a flow chart of calculating at least one position measurement result of a point to be measured according to an embodiment of the present disclosure.
FIG. 7 is a flow chart of calculating a final position measurement result of a point to be measured based on the at least one position measurement result according to an embodiment of the present disclosure.

## DETAILED DESCRIPTION

Exemplary embodiments will be described more fully with reference to the accompanying drawings.

However, exemplary embodiments may be implemented in various forms and should not be construed as being limited to the examples set forth herein; rather, these embodiments are provided so that the present disclosure will be thorough and complete, and will fully convey the concept of the exemplary embodiments to those skilled in the art. The described features, structures, or characteristics may be combined in any suitable manner in one or more embodiments.

In addition, the accompanying drawings are merely schematic illustrations of the present disclosure and are not necessarily drawn to scale. The same reference numerals in the drawings refer to the same or similar parts, and thus repeated descriptions thereof will be omitted. Some block diagrams shown in the drawings are functional entities, which do not necessarily correspond to physically or logically independent entities. These functional entities may be implemented in the form of software, or in one or more hardware modules or integrated circuits, or in different networks and/or processor devices and/or microcontroller devices. Although terms such as "first" or "second" are used in this specification to denote certain features, they are merely used for indicative purposes and do not limit the quantity and importance of the specific features.

The flowcharts shown in the accompanying drawings are merely illustrative and do not necessarily include all steps. For example, some steps may be further decomposed, and some steps may be combined or partially combined. Therefore, the actual execution order may be changed according to actual conditions.

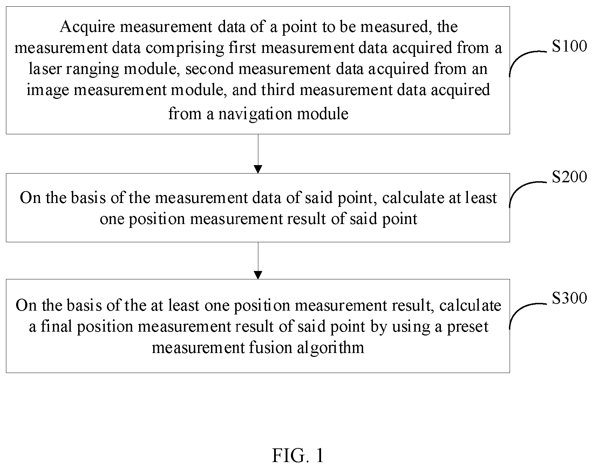

As shown in FIG. 1, an embodiment of the present disclosure provides a measurement method implemented with a measurement system. The measurement system includes a laser ranging module, an image measurement module, and a navigation module. The measurement method includes the following steps S100-S300.

S100: Acquire measurement data of a point to be measured, the measurement data including first measurement data acquired from the laser ranging module, second measurement data acquired from the image measurement module, and third measurement data acquired from the navigation module.

Wherein the first measurement data, the second measurement data, and the third measurement data respectively acquired from different measurement modules form multi-source measurement data, which are jointly used for subsequent calculation of measurement results.

S200: Calculate at least one position measurement result of the point to be measured based on the measurement data of the point to be measured.

S300: Calculate a final position measurement result of the point to be measured based on the at least one position measurement result by using a preset measurement fusion algorithm.

Therefore, the present disclosure provides a new method for measuring the position of a spatial point to be measured, which is implemented with a measurement system integrated with a laser ranging module, an image measurement module, and a navigation module. Through fusion processing of multi-source measurement data, the position measurement accuracy of the point to be measured at different distances is improved, the impact of factors such as light intensity, measurement equipment tilt angle, and operator jitter during the measurement process is reduced, and the stability of measurement accuracy is ensured.

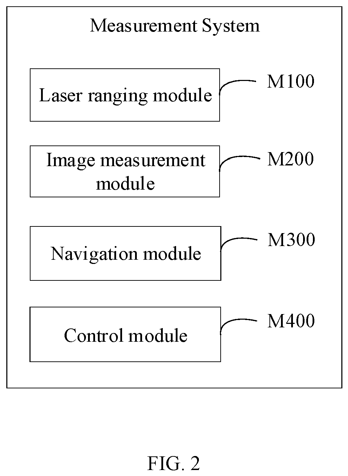

As shown in FIG. 2, an embodiment of the present disclosure further provides a measurement system configured to implement the aforementioned measurement method. The measurement system includes:

a laser ranging module M100, an image measurement module M200, and a navigation module M300; a control module M400 configured to acquire measurement data of a point to be measured, the measurement data including first measurement data acquired from the laser ranging module M100, second measurement data acquired from the image measurement module M200, and third measurement data acquired from the navigation module M300; calculate at least one position measurement result of the point to be measured based on the measurement data of the point to be measured; and calculate a final position measurement result of the point to be measured based on the at least one position measurement result by using a preset measurement fusion algorithm.

By adopting the measurement system, the present disclosure implements measurement via a system integrated with a laser ranging module, an image measurement module, and a navigation module. Through fusion processing of multi-source measurement data, the position measurement accuracy of the point to be measured is improved, the impact of factors such as light intensity, measurement equipment tilt angle, and operator jitter during the measurement process is reduced, and the stability of measurement accuracy is ensured.

An embodiment of the present disclosure further provides a measurement device, including:

a housing;
a laser ranging module provided on the housing;
an image measurement module provided on the housing, wherein a shooting direction of the image measurement module is consistent with a laser emission direction of the laser ranging module;
a navigation module, at least part of which is provided inside the housing, wherein an antenna of the navigation module is provided outside the housing; for example, the navigation module includes a GNSS module, an IMU sensor, and an antenna, with the GNSS module and the IMU sensor provided inside the housing; and

a control module provided inside the housing and configured to execute the steps of the aforementioned measurement method by running executable instructions.

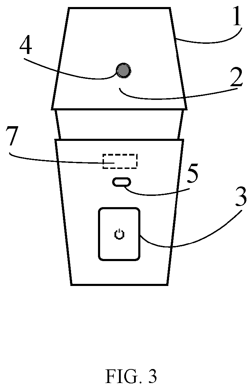

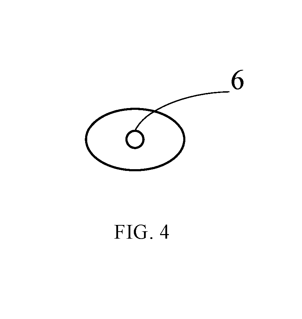

FIGS. 3 and 4 are schematic structural views of the measurement device according to the embodiment. The measurement device includes a housing 1, a navigation module 2, an image measurement module 4, a laser ranging module 5, and a control module 7. A linkage trigger device 3 is provided on a surface of the housing 1, and a centering rod connection hole 6 is further provided on the housing 1 for connecting with a centering rod. The measurement device adopts an integrated design structure with a small size and low power consumption, facilitating portability and long-term operation by users.

The navigation module 2 includes a GNSS/INS integrated navigation module, wherein GNSS refers to Global Navigation Satellite System and INS refers to Inertial Navigation System. The navigation module 2 includes a navigation unit and an IMU (Inertial Measurement Unit) sensor. The navigation unit includes a GNSS antenna, a radio frequency front end, a Kalman filter, and a CPU processor. The IMU sensor includes a three-axis accelerometer and a three-axis gyroscope. The navigation module 2 sends high-frequency attitude observations of the IMU sensor and GNSS observations to the CPU processor to implement mechanical arrangement of the inertial navigation system and RTK calculation of the satellite navigation system respectively, and the CPU processor further fuses the calculation results via the Kalman filter to obtain high-frequency position and attitude information of the IMU sensor, which serves as the navigation information.

The linkage trigger device 3 can be in the form of a button or a touch panel. When operated, the linkage trigger device 3 triggers the laser ranging module 5 to perform distance measurement and the image measurement module 4 to capture images simultaneously. The image measurement module 4 can be a camera, specifically including a lens, a photosensitive chip, an A/D converter, and a digital information processing chip. The laser ranging module 5 includes a single-line laser range finder and a CPU processor. The laser ranging module 5 irradiates a laser point on a spatial point to be measured, acquires phase difference observations when triggered by the linkage trigger device 3, and processes the observations via the CPU processor to obtain distance information between the point to be measured and the laser emission point. The shooting direction of the image measurement module 4 is consistent with the laser emission direction of the laser ranging module 5, so that the image measurement module 4 and the laser ranging module 5 obtain distance information and captured images simultaneously when triggered at the same time.

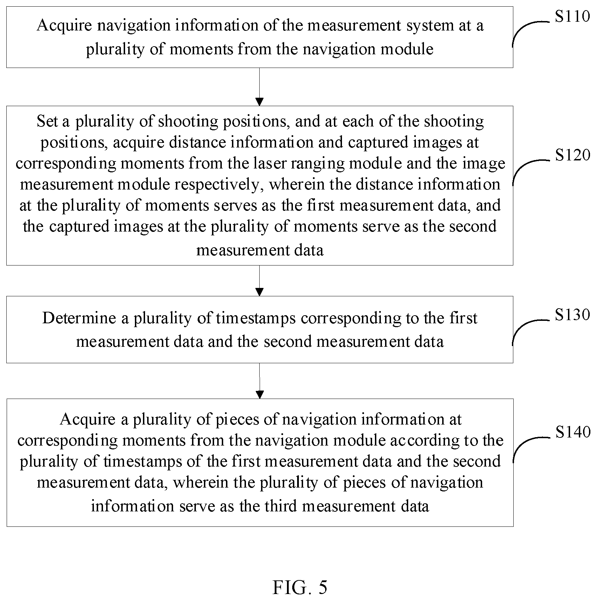

As shown in FIG. 5, in the embodiment, the step S100: acquire measurement data of a point to be measured includes the following steps S110-S140.

S110: Acquire navigation information of the measurement system at a plurality of moments from the navigation module.

Wherein, the navigation module is used to acquire navigation information at the plurality of moments in real time, and the navigation information corresponding to each moment is attached with a timestamp of the acquisition moment.

The step S 110 specifically includes: turning on the navigation module on an open ground surface, setting the navigation module and accessing differential data to obtain RTK high-precision three-dimensional position and velocity information; then initializing the navigation module and using the Kalman filter to get the navigation information.

Wherein the navigation module can be initialized by the following steps: first, keeping the receiver stationary for several seconds to obtain initial values of the roll angle and pitch angle of the IMU sensor relative to the local navigation coordinate system; then, shaking the measurement device to initialize and obtain the heading angle of the IMU sensor relative to the local navigation coordinate system, thereby initializing the GNSS/INS integrated navigation module.

Wherein the local navigation coordinate system refers to the Local Level Frame (LLF), which can provide intuitive navigation parameters. The origin of the coordinate system is the carrier center, the x-axis points north along the tangent direction of the reference ellipsoid meridian, the y-axis points vertically downward along the normal line of the reference ellipsoid, and the z-axis forms a right-hand coordinate system with the x-axis and y-axis in the local horizontal plane. In the embodiment, the carrier is the measurement device equipped with the IMU sensor.

The initialization of the navigation module may also include the following steps: selecting any fixed point on an open ground surface, tilt the measurement device at a certain angle above the selected fixed point (generally in four directions: front, rear, left, and right), irradiating the laser point of the laser ranging module on the fixed point to obtain multiple pieces of distance information from the emission point of the laser ranging module to the fixed point, and calculate the initial heading angle of the IMU sensor relative to the local navigation coordinate system by using the distance information to complete the initialization of the GNSS/INS integrated navigation module.

After the navigation module is initialized, the RTK three-dimensional position and velocity information and the mechanical arrangement results of the IMU sensor are continuously sent to the Kalman filter for calculation to obtain high-frequency three-dimensional position and attitude information of the IMU sensor, which serves as the real-time navigation information.

S120: Set a plurality of shooting positions, and at each of the shooting positions, acquire distance information and captured images at corresponding moments from the laser ranging module and the image measurement module respectively, wherein the distance information at the plurality of moments serves as the first measurement data, and the captured images at the plurality of moments serve as the second measurement data.

Specifically, the shooting positions and the plurality of moments may be in a one-to-one correspondence, or multiple pieces of distance information and multiple captured images may be acquired at each shooting position, i.e., the shooting positions and the plurality of moments are in a one-to-many relationship, while the plurality of moments are in a one-to-one correspondence with the distance information and captured images.

Taking the setting of two shooting positions as an example, the step S120 specifically includes acquiring distance information and captured images at the first position and acquiring distance information and captured images at the second position.

The step of acquiring distance information and captured images at the first position includes: at the first position, controlling the laser ranging module to irradiate the laser point on the point to be measured, pressing the linkage trigger device, and the laser ranging module and the image measurement module respectively collecting distance information and captured images corresponding to the point to be measured. Wherein the laser ranging module and the image measurement module respectively attach timestamps of the collection moment at the first position to the collected distance information and the captured images based on PPS (Pulse Per Second) signals.

Similarly, at the second position, distance information and captured images of the same point to be measured at the second position are acquired by steps similar to the specific steps at the first position. The laser ranging module and the image measurement module attach timestamps of the collection moment at the second position to the collected distance information and captured images. The captured images taken at the second position and the first position should generally have a certain parallax. In addition, multiple shooting positions can be selected to perform the above-described measurement process on the point to be measured, so as to obtain distance information and captured images with timestamps collected at multiple shooting positions.

S130: Determine a plurality of timestamps corresponding to the first measurement data and the second measurement data.

S140: Acquire a plurality of pieces of navigation information at corresponding moments from the navigation module according to the plurality of timestamps of the first measurement data and the second measurement data, wherein the plurality of pieces of navigation information serve as the third measurement data. Therefore, the third measurement data also includes navigation information at multiple moments, and the timestamps of the third measurement data correspond to those of the first measurement data and the second measurement data.

Wherein the timestamps include the timestamp of each moment when the distance information and captured images are acquired. The navigation information at the moments corresponding to the timestamps is acquired from the navigation module, so that the IMU position and attitude information obtained by the navigation module, the distance information obtained by the laser ranging module, and the captured images obtained by the image measurement module have the same time reference.

In the embodiment, the step S120: acquire distance information and captured images at corresponding moments from the image measurement module and the laser ranging module respectively includes the following steps:

at each of the shooting positions, controlling the laser ranging module to emit laser light to irradiate the point to be measured;

acquiring the distance information from the laser ranging module through a trigger command, and collecting a captured image of the point to be measured through the image measurement module at the same moment; wherein the trigger command can be sent by pressing a physical button or by a mobile terminal carried by the operator.

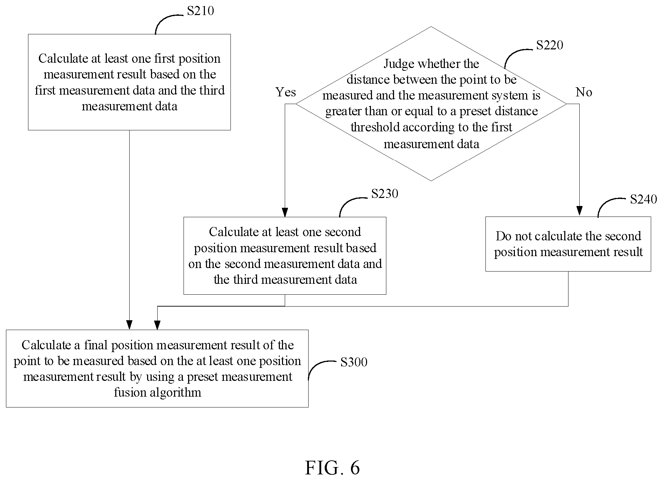

As shown in FIG. 6, in the embodiment, the step S200: calculate at least one position measurement result of the point to be measured based on the measurement data of the point to be measured includes the following steps S210 and S230.

S210: Calculate at least one first position measurement result based on the first measurement data and the third measurement data.

S230: Calculate at least one second position measurement result based on the second measurement data and the third measurement data.

As described above, the navigation module includes an IMU sensor and a navigation unit, and the navigation information includes three-dimensional position information and attitude information of the IMU sensor. The step S210: calculate at least one first position measurement result based on the first measurement data and the third measurement data includes the following steps:

determining three-dimensional coordinates $r_{IMU}^n$ of the IMU sensor in a geodetic coordinate system according to the three-dimensional position information of the IMU sensor; wherein the three-dimensional position information of the IMU sensor obtained from the navigation module is the three-dimensional coordinates of the IMU sensor in the geodetic coordinate system;

acquiring coordinate conversion parameters $D^{-1}$ between the current navigation coordinate system and the geodetic coordinate system; wherein the coordinate conversion parameters $D^{-1}$ (including a translation matrix and a rotation matrix) between the current navigation coordinate system and the geodetic coordinate system can be calculated according to the three-dimensional position information of the IMU sensor and the inherent parameters of the Earth reference ellipsoid, or a pre-configured coordinate conversion parameters $D^{-1}$ between the current navigation coordinate system and the geodetic coordinate system can be directly obtained according to the type of the navigation module;

determining coordinate conversion parameters $C_b^n$ (including a translation matrix and a rotation matrix) from the carrier coordinate system of the IMU sensor to the current navigation coordinate system according to the attitude information of the IMU sensor; wherein the carrier coordinate system refers to an orthogonal coordinate system fixedly connected to the carrier, the x-axis is the same as the roll axis direction of the carrier's angular motion and points to the front of the carrier, the y-axis is the same as the pitch axis direction of the carrier's angular motion and points to the right side of the carrier, and the z-axis is the same as the heading axis direction of the carrier's angular motion and forms a right-hand coordinate system with the x-axis and y-axis;

acquiring a projection coordinate $l_1^b$ of a position vector pointing from the center of the IMU sensor to the laser emission point in the carrier coordinate system; wherein the projection coordinate $l_1^b$ can be obtained by calibrating the external parameters of the IMU sensor and the laser ranging module via software, the external parameters including coordinate conversion parameters between the carrier coordinate system of the IMU sensor and the laser coordinate system of the laser ranging module, including a translation matrix and a rotation matrix; the projection coordinate $l_1^b$ can also be obtained by actually measuring the distance between the IMU sensor and the laser ranging module with a ruler, or by measuring from the structural design drawings of the measurement device, wherein the three-dimensional coordinates of the laser emission point in the laser coordinate system are converted into three-dimensional coordinates in the carrier coordinate system;

determining a projection coordinate $l_2^b$ of a position vector pointing from the laser emission point to the point to be measured in the IMU carrier coordinate system according to the distance information;

wherein the projection coordinate $l_2^b$ can be obtained by: acquiring distance information between the point to be measured and the laser emission point via the laser ranging module to obtain the three-dimensional coordinates of the point to be measured in the laser coordinate system, and converting the three-dimensional coordinates of the point to be measured in the laser coordinate system into the carrier coordinate system of the IMU sensor based on the external parameters of the IMU sensor and the laser range finder.

The first position measurement result is calculated using the following formula:

$$r_M^n = r_{IMU}^n + D^{-1}C_b^n(l_1^b + l_2^b)$$

wherein $r_M^n$ is the first measured three-dimensional coordinates of the point to be measured in the geodetic coordinate system, serving as the first position measurement result.

In the embodiment, the step S230: calculate at least one second position measurement result based on the second measurement data and the third measurement data includes the following steps (1)- (6).

(1) Calibrate the internal parameters of the image measurement module. The camera internal parameters of the image measurement module can be calibrated via a camera calibration platform using a checkerboard or an AprilGrid calibration board. The camera internal parameters mainly include resolution (e.g., 1920×1080), coordinate conversion parameters between the UV coordinate system and the pixel coordinate system, and the size of the photosensitive chip.

(2) Select any image from a plurality of captured images taken by the image measurement module as a reference image to initialize image measurement; specifically including the following steps:

selecting a captured image at one moment as a reference image, and taking the camera coordinate system at the moment corresponding to the timestamp of the reference image as the reference coordinate system; wherein the camera coordinate system refers to a coordinate system based on the image measurement module, whose origin is the center of the optical lens of the image measurement module, the x-axis points to the right along the camera lens direction, the z-axis points forward along the camera lens direction, and the y-axis forms a right-hand coordinate system with the x-axis and z-axis; and
acquiring the coordinate conversion parameters between the reference coordinate system and the geodetic coordinate system according to the navigation information corresponding to the timestamp of the reference image.

In the embodiment, the step of acquiring the coordinate conversion parameters between the reference coordinate system and the geodetic coordinate system according to the navigation information corresponding to the timestamp of the reference image includes the following steps:

calibrating the external parameters of the IMU sensor and the image measurement module, wherein the external parameters include coordinate conversion parameters between the carrier coordinate system of the IMU sensor and the image measurement module (including a rotation matrix and a translation matrix); and
determining the coordinate conversion parameters (including a translation matrix and a rotation matrix) between the reference coordinate system and the geodetic coordinate system by combining the coordinate conversion parameters between the carrier coordinate system of the IMU sensor and the geodetic coordinate system with the external parameters of the IMU sensor and the image measurement module.

(3) Acquire coordinate conversion parameters (including a translation matrix and a rotation matrix) between the camera coordinate systems at the moments corresponding to the timestamps of other captured images except the reference image and the reference coordinate system, according to the navigation information corresponding to the timestamps of other captured images except the reference image and the navigation information corresponding to the timestamp of the reference image; wherein the coordinate conversion parameters can also be obtained by the VIO (Visual Inertial Odometry) method, which is a technology for measuring sensor states using one or more cameras and one or more IMU sensors, or by the VO (Visual Odometry) method after determining the monocular scale factor.

(4) Extract plane pixel coordinates of laser irradiation points in the plurality of captured images.

Specifically, the laser emitted by the laser ranging module irradiates the point to be measured to form a red background, and the plane pixel coordinates of the point to be measured are extracted from each captured image; wherein the extraction can include those from other captured images except the reference image, or those from all captured images including the reference image.

The plane pixel coordinates can be directly extracted by a feature point extraction algorithm. The plane pixel coordinates can also be obtained by manual screening after extracting several closest similar feature points, or obtained by manual selection after zooming in on the image, thereby determining the pixel coordinates corresponding to the point to be measured.

(5) Calculate the three-dimensional coordinates of the point to be measured in the reference coordinate system based on the plane pixel coordinates of the laser irradiation points in the plurality of captured images and the coordinate conversion parameters between the camera coordinate systems at the moments corresponding to the timestamps of the captured images and the reference coordinate system.

In the embodiment, the step (5) includes the following steps:

for each of the captured images, calculating first three-dimensional coordinates of the point to be measured corresponding to the captured image in the reference coordinate system respectively based on the plane pixel coordinates of the laser irradiation point in the captured image and the coordinate conversion parameters between the camera coordinate system at the moment corresponding to the timestamp of the captured image and the reference coordinate system; and

determining the three-dimensional coordinates of the point to be measured in the reference coordinate system by using a triangulation method or constructing a three-dimensional point cloud based on the plurality of first three-dimensional coordinates.

Specifically, the three-dimensional coordinates of the point to be measured in the reference coordinate system are calculated by using a triangulation method according to the plane pixel coordinates of the point to be measured extracted on the captured image plane, the calibrated camera internal parameters, and the coordinate system transformation relationship between the camera coordinate system at the moment corresponding to the timestamp of the captured image and the reference coordinate system. If the image measurement module takes more than two captured images, three-dimensional point cloud information around the point to be measured can be generated by the SFM (Structure From Motion) method, and then the three-dimensional coordinates of the point to be measured in the reference coordinate system are determined according to the three-dimensional point cloud information. Wherein the triangulation method refers to: in the field of photogrammetry, the three-dimensional coordinates of an image point cannot be recovered from a single image; at least two images are required to obtain the real coordinates of a pixel point. Triangulation determines the distance to a point based on an included angle between two observing directions of observing the same point from two shooting positions, thereby obtaining depth information and further determining the real coordinates. SFM is a technology for estimating three-dimensional structures from a sequence of multiple two-dimensional images containing visual motion information.

(6) Determine the second measured three-dimensional coordinates of the point to be measured in the geodetic coordinate system as the second position measurement result according to the coordinate conversion parameters between the reference coordinate system and the geodetic coordinate system and the three-dimensional coordinates of the point to be measured in the reference coordinate system.

Therefore, in the embodiment, by irradiating the laser on the point to be measured to form a red background during shooting, the laser point can be directly used as an image feature point with obvious feature information, eliminating the need to use complex feature point extraction and matching algorithms for image measurement, which saves computing resources and ensures calculation timeliness. Users only need to simply control the linkage trigger device to collect distance information and captured images simultaneously, making the operation very convenient.

In the embodiment, the combination of navigation information, distance information, and image information enables accurate measurement of the position of the point to be measured, which is particularly suitable for measuring the position of a long-distance spatial point to be measured. In one implementation, when the measurement method is used to measure the position of a short-distance spatial point to be measured, due to the short distance, the measurement is less likely to be affected by other factors, and high-precision position measurement can also be achieved based on navigation information and distance information. In this case, there is no need to process captured images, which saves image processing time and improves the speed of calculation for position results.

Specifically, as shown in FIG. 6, in the embodiment, after the step S200: calculate at least one position measurement result of the point to be measured based on the measurement data of the point to be measured and before the step S230, the method further includes the following steps S220, S230, and S240.

S220: Judge whether the distance between the point to be measured and the measurement system is greater than or equal to a preset distance threshold according to the first measurement data.

If yes, the position measurement is for a long-distance point to be measured, proceed to step S230: calculate at least one second position measurement result based on the second measurement data and the third measurement data, and use at least one first position measurement result and at least one second position measurement result for position result fusion in the subsequent step S300;

If not, the position measurement is for a short-distance point to be measured, perform S240, do not calculate the second position measurement result, but directly use the obtained at least one first position measurement result for position result fusion.

If the point to be measured is far away, when the operator holds the measurement device to collect distance information and captured images, the laser point may be difficult to irradiate the three-dimensional spatial point to be measured due to hand jitter, or the image quality may be too poor due to excessive light or too dark environment during image collection, making feature point extraction difficult. In this case, the captured images can be adaptively screened to eliminate those with poor shooting quality, avoiding introducing inaccurate position measurement results.

In the embodiment, the step S230: calculate at least one second position measurement result based on the second measurement data and the third measurement data includes the following steps:

> screening each captured image in the second measurement data, and eliminating captured images with a quality failing to meet preset image quality requirements;
> calculating the second position measurement result based on the non-eliminated captured images and the navigation information at the corresponding moments in the third measurement data.

Wherein quality scores of the captured images can be manually assigned by users or calculated by a preset image quality scoring model. The quality scores can also be determined by setting several quality scoring indicators (such as brightness, sharpness, contrast, visibility of the point to be measured, etc.), assigning scores to each indicator respectively, and then acquiring the total score via weighted calculation.

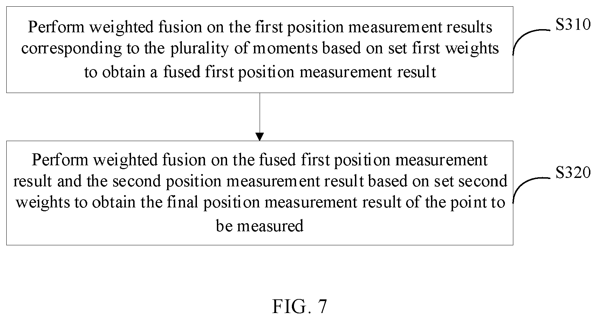

As shown in FIG. 7, in the embodiment, the step S300: calculate the final position measurement result of the point to be measured based on the at least one position measurement result by using the preset measurement fusion algorithm includes the following steps S310 and S320.

S310: Perform weighted fusion on the first position measurement results corresponding to the plurality of moments based on set first weights to obtain a fused first position measurement result. Wherein weighted fusion refers to weighted averaging of the three-dimensional position coordinates in the first position measurement results at the plurality of moments to obtain a set of three-dimensional position coordinates.

S320: Perform weighted fusion on the fused first position measurement result and the second position measurement result based on set second weights to obtain the final position measurement result of the point to be measured. Wherein weighted fusion refers to weighted averaging of the three-dimensional position coordinates in the fused first position measurement result and the second position measurement result to obtain final three-dimensional position coordinates as the final position measurement result.

In the embodiment, the first position measurement results corresponding to the plurality of moments are weighted fused based on the corresponding first weights using the following formula:

$$P = \frac{\sum_i w_i P_i}{\sum_i w_i}$$

wherein P is the fused first position measurement result, $P_i$ is the first position measurement result at the i-th moment, $w_i$ is the first weight of the first position measurement result at the i-th moment, and satisfies:

$$w_i = \frac{1}{s_i{}^2}$$

wherein i $\in$ [1,n], n is the number of moments corresponding to the obtained first position measurement results, and $s_i$ is the distance information at the i-th moment.

In the embodiment, the method further includes the following step: setting the second weights of the fused first position measurement result and the second position measurement result according to the image quality of the captured images corresponding to the second position measurement result.

For example, the second weights of the fused first position measurement result and the second position measurement result can be determined according to the quality scores of the images. For example, when the quality scores of the images are less than a first preset score threshold, the second weight of the second position measurement result is set to 0 and the second weight of the fused first position measurement result is set to 1; when the quality scores of the images are between the first preset score threshold and a second preset score threshold, the second weight of the first position measurement result is set to 0.7 and the second weight of the second position measurement result is set to 0.3; when the quality scores of the images are greater than the second preset score threshold, the second weight of the first position measurement result is set to 0.5 and the second weight of the second position measurement result is set to 0.5. The method of setting the second weights here is only an example; other setting methods can also be adopted in other implementations, all of which fall within the protection scope of the present disclosure.

Therefore, in the embodiment, by fusing measurement data from multi-source sensors and combining the distance of the point to be measured, the quality of measurement data, and the quality of captured images to

screen and fuse measurement results, an optimal position measurement result can be output, effectively avoiding the impact of hand jitter, weather conditions, or other interference factors on position measurement accuracy, and improving position measurement accuracy.

An embodiment of the present disclosure further provides a computer-readable storage medium for storing a program, which implements the steps of the aforementioned measurement method when executed by a processor. In some possible implementations, various aspects of the present disclosure may also be implemented in the form of a program product including program code, which when run on a terminal device, causes the terminal device to execute the steps according to various exemplary implementations of the present disclosure described in the above measurement method section of this specification.

The program product for implementing the above method according to the embodiments of the present disclosure may adopt a portable compact disc read-only memory (CD-ROM) and include program code, and may be run on a terminal device such as a personal computer. However, the program product of the present disclosure is not limited thereto. In this document, a readable storage medium may be any tangible medium that contains or stores a program that can be used by or in connection with an instruction execution system, apparatus, or device.

The program product may adopt any combination of one or more readable media. The readable medium may be a readable signal medium or a readable storage medium. The readable storage medium may be, for example but not limited to, an electronic, magnetic, optical, electromagnetic, infrared, or semiconductor system, apparatus, or device, or any combination thereof. More specific examples (a non-exhaustive list) of the readable storage medium include: an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The computer-readable storage medium may include a data signal propagated in baseband or as part of a carrier wave, with readable program code embodied therein. Such a propagated data signal may take a variety of forms, including but not limited to an electromagnetic signal, an optical signal, or any suitable combination thereof. The readable storage medium may also be any readable medium other than a readable storage medium that can send, propagate, or transmit a program for use by or in connection with an instruction execution system, apparatus, or device. The program code contained on the readable storage medium may be transmitted using any appropriate medium, including but not limited to wireless, wired, optical fiber cable, RF, etc., or any suitable combination thereof.

The program code for performing the operations of the present disclosure may be written in any combination of one or more programming languages, including object-oriented programming languages such as Java, C++, etc., as well as conventional procedural programming languages such as the "C" language or similar programming languages. The program code may be executed entirely on the user's computing device, partly on the user's device, as a stand-alone software package, partly on the user's computing device and partly on a remote computing device, or entirely on the remote computing device or server. In the case of a remote computing device, the remote computing device may be connected to the user's computing device through any kind of network, including a local area network (LAN) or a wide area network (WAN), or may be connected to an external computing device (e.g., via the Internet using an Internet service provider).

When the program in the computer storage medium is executed by the processor, the steps of the aforementioned measurement method are implemented. Therefore, the computer storage medium can also achieve the technical effects of the above measurement method.

The above content is a further detailed description of the present disclosure in conjunction with specific preferred implementations, and the specific implementation of the present disclosure cannot be limited to these descriptions. For those skilled in the art to which the present disclosure belongs, several simple deductions or substitutions can be made without departing from the concept of the present disclosure, all of which should be regarded as falling within the protection scope of the present disclosure.

**Claims**

1. A measurement method implemented with a measurement system, the measurement system comprising a laser ranging module, an image measurement module, and a navigation module; wherein the method comprises the following steps:

     acquiring measurement data of a point to be measured, the measurement data comprising first measurement data acquired from the laser ranging module, second measurement data acquired from the image measurement module, and third measurement data acquired from the navigation module;
     calculating at least one position measurement result of the point to be measured based on the measurement data of the point to be measured;
     calculating a final position measurement result of the point to be measured based on the at least one position measurement result by using a preset measurement fusion algorithm.

2. The measurement method according to claim 1, wherein the step of acquiring the measurement data of the point to be measured comprises the following steps:

acquiring navigation information of the measurement system at a plurality of moments from the navigation module;

setting a plurality of shooting positions, and at each of the shooting positions, acquiring distance information and captured images at corresponding moments from the laser ranging module and the image measurement module respectively; wherein the distance information at the plurality of moments serves as the first measurement data, and the captured images at the plurality of moments serve as the second measurement data;

determining a plurality of timestamps corresponding to the first measurement data and the second measurement data;

acquiring a plurality of pieces of navigation information at corresponding moments from the navigation module according to the plurality of timestamps of the first measurement data and the second measurement data, wherein the navigation information serves as the third measurement data.

3. The measurement method according to claim 2, wherein the step of acquiring the distance information and the captured images at the corresponding moments from the image measurement module and the laser ranging module respectively comprises the following steps:

at each of the shooting positions, controlling the laser ranging module to emit laser light to irradiate the point to be measured;

based on a trigger command, acquiring the distance information from the laser ranging module and collecting an image of the point to be measured through the image measurement module at the same moment.

4. The measurement method according to claim 2, wherein the step of calculating the at least one position measurement result of the point to be measured based on the measurement data of the point to be measured comprises the following steps:

calculating at least one first position measurement result based on the first measurement data and the third measurement data;

calculating at least one second position measurement result based on the second measurement data and the third measurement data.

5. The measurement method according to claim 4, wherein the navigation module comprises an IMU sensor and a navigation unit, and the navigation information comprises three-dimensional position information and attitude information of the IMU sensor;

wherein the step of calculating the at least one first position measurement result based on the first measurement data and the third measurement data comprises the following steps:

determining three-dimensional coordinates $r_{IMU}^n$ of the IMU sensor in a geodetic coordinate system according to the three-dimensional position information of the IMU sensor;

acquiring coordinate conversion parameters $D^{-1}$ between a current navigation coordinate system and the geodetic coordinate system;

determining coordinate conversion parameters $C_b^n$ from a carrier coordinate system of the IMU sensor to the current navigation coordinate system according to the attitude information of the IMU sensor;

acquiring a projection coordinate $l_1^b$ of a position vector pointing from a center of the IMU sensor to a laser emission point in the carrier coordinate system;

determining a projection coordinate $l_2^b$ of a position vector pointing from the laser emission point to the point to be measured in the IMU carrier coordinate system according to the distance information;

calculating to obtain the first position measurement result.

6. The measurement method according to claim 4, wherein the step of calculating the at least one second position measurement result based on the second measurement data and the third measurement data comprises the following steps:

selecting a captured image at one moment as a reference image, and taking a camera coordinate system at a moment corresponding to a timestamp of the reference image as a reference coordinate system;

acquiring coordinate conversion parameters between the reference coordinate system and the geodetic coordinate system, according to the navigation information corresponding to the timestamp of the reference image;

acquiring coordinate conversion parameters between camera coordinate systems at moments corresponding to timestamps of other captured images except the reference image and the reference coordinate system, according to navigation information corresponding to timestamps of the other captured images except the reference image and navigation information corresponding to the timestamp of the reference image;

extracting plane pixel coordinates of laser irradiation points in the plurality of captured images;

calculating three-dimensional coordinates of the point to be measured in the reference coordinate system, based on the plane pixel coordinates of the laser irradiation points in the plurality of captured images and the coordinate conversion parameters between the camera coordinate systems at the moments corresponding to the timestamps of the captured images and the reference coordinate system;

determining second measured three-dimensional coordinates of the point to be measured in the geodetic coordinate system as the second position measurement result, according to the coordinate conversion parameters between the reference coordinate system and the geodetic coordinate system and the three-dimensional coordinates of the point to be measured in the reference coordinate system.

7. The measurement method according to claim 6, wherein the navigation module comprises an IMU sensor and a navigation unit, and the navigation information comprises three-dimensional position information and attitude information of the IMU sensor;

the step of acquiring the coordinate conversion parameters between the reference coordinate system and the geodetic coordinate system, according to the navigation information corresponding to the timestamp of the reference image comprises the following steps:

acquiring coordinate conversion parameters between a carrier coordinate system of the IMU sensor and a camera coordinate system of the image measurement module;

determining the coordinate conversion parameters between the reference coordinate system and the geodetic coordinate system, based on three-dimensional position information and attitude information of the IMU sensor at the moment corresponding to the timestamp of the reference image.

8. The measurement method according to claim 6, wherein the step of calculating the three-dimensional coordinates of the point to be measured in the reference coordinate system, based on the plane pixel coordinates of the laser irradiation points in the plurality of captured images and the coordinate conversion parameters between the camera coordinate systems at the moments corresponding to the timestamps of the captured images and the reference coordinate system comprises the following steps:

for each of the captured images, calculating first three-dimensional coordinates of the point to be measured corresponding to the captured image in the reference coordinate system respectively, based on the plane pixel coordinates of the laser irradiation point in the captured image and the coordinate conversion parameters between the camera coordinate system at the moment corresponding to the timestamp of the captured image and the reference coordinate system;

determining the three-dimensional coordinates of the point to be measured in the reference coordinate system based on a plurality of first three-dimensional coordinates by using a triangulation method or constructing a three-dimensional point cloud.

9. The measurement method according to claim 4, wherein after the step of calculating the at least one position measurement result of the point to be measured based on the measurement data of the point to be measured and before the step of calculating the second position measurement result based on the second measurement data and the third measurement data, the method further comprises the following steps:

judging whether a distance between the point to be measured and the measurement system is greater than or equal to a preset distance threshold according to the first measurement data;

if yes, calculating at least one second position measurement result based on the second measurement data and the third measurement data;

if not, refraining from calculating the second position measurement result.

10. The measurement method according to claim 4, wherein the step of calculating the at least one second position measurement result based on the second measurement data and the third measurement data comprises the following steps:

screening the captured images in the second measurement data, and eliminating captured images with a quality failing to meet preset image quality requirements;

calculating the second position measurement result based on non-eliminated captured images and the navigation information at corresponding moments in the third measurement data.

**11.** The measurement method according to claim 4, wherein the step of calculating the final position measurement result of the point to be measured based on the at least one position measurement result by using the preset measurement fusion algorithm comprises the following steps:

performing weighted fusion on first position measurement results corresponding to the plurality of moments based on set first weights to obtain a fused first position measurement result; performing weighted fusion on the fused first position measurement result and the second position measurement result based on set second weights to obtain the final position measurement result of the point to be measured.

**12.** The measurement method according to claim 11, wherein the first position measurement results corresponding to the plurality of moments are subjected to weighted fusion based on the set first weights.

**13.** The measurement method according to claim 11, wherein the method further comprises the following step:
setting the second weights of the fused first position measurement result and the second position measurement result according to image quality of the captured images corresponding to the second position measurement result.

**14.** A measurement system configured to implement the measurement method according to any one of claims 1 to 13, wherein the system comprising:

a laser ranging module, an image measurement module, and a navigation module; a control module configured to acquire measurement data of a point to be measured, the measurement data comprising first measurement data acquired from the laser ranging module, second measurement data acquired from the image measurement module, and third measurement data acquired from the navigation module; calculate at least one position measurement result of the point to be measured based on the measurement data of the point to be measured; and calculate a final position measurement result of the point to be measured based on the at least one position measurement result by using a preset measurement fusion algorithm.

**15.** A measurement device comprising:

a housing;

a laser ranging module provided on the housing; an image measurement module provided on the housing, wherein a shooting direction of the image measurement module is consistent with a laser emission direction of the laser ranging module; a navigation module, at least part of which is provided inside the housing, and an antenna of the navigation module is provided outside the housing; a control module provided inside the housing and configured to execute the steps of the measurement method according to any one of claims 1 to 13.

**16.** A computer-readable storage medium for storing a program, wherein when the program is executed by a processor, the steps of the measurement method according to any one of claims 1 to 13 are implemented.

Acquire measurement data of a point to be measured, the measurement data comprising first measurement data acquired from a laser ranging module, second measurement data acquired from an image measurement module, and third measurement data acquired from a navigation module — S100

On the basis of the measurement data of said point, calculate at least one position measurement result of said point — S200

On the basis of the at least one position measurement result, calculate a final position measurement result of said point by using a preset measurement fusion algorithm — S300

FIG. 1

FIG. 2

FIG. 3

FIG. 4

| Acquire navigation information of the measurement system at a plurality of moments from the navigation module | S110 |

| Set a plurality of shooting positions, and at each of the shooting positions, acquire distance information and captured images at corresponding moments from the laser ranging module and the image measurement module respectively, wherein the distance information at the plurality of moments serves as the first measurement data, and the captured images at the plurality of moments serve as the second measurement data | S120 |

| Determine a plurality of timestamps corresponding to the first measurement data and the second measurement data | S130 |

| Acquire a plurality of pieces of navigation information at corresponding moments from the navigation module according to the plurality of timestamps of the first measurement data and the second measurement data, wherein the plurality of pieces of navigation information serve as the third measurement data | S140 |

FIG. 5

S210

Calculate at least one first position measurement result based on the first measurement data and the third measurement data

S220

Judge whether the distance between the point to be measured and the measurement system is greater than or equal to a preset distance threshold according to the first measurement data

Yes

No

S230

Calculate at least one second position measurement result based on the second measurement data and the third measurement data

S240

Do not calculate the second position measurement result

S300

Calculate a final position measurement result of the point to be measured based on the at least one position measurement result by using a preset measurement fusion algorithm

FIG. 6

Perform weighted fusion on the first position measurement results corresponding to the plurality of moments based on set first weights to obtain a fused first position measurement result ⟋ S310

Perform weighted fusion on the fused first position measurement result and the second position measurement result based on set second weights to obtain the final position measurement result of the point to be measured ⟋ S320

FIG. 7

## INTERNATIONAL SEARCH REPORT

| International application No. |
| --- |
| **PCT/CN2023/125169** |

| A. | CLASSIFICATION OF SUBJECT MATTER |
| --- | --- |

G01C15/00(2006.01)i; G01C21/16(2006.01)i; G01C21/00(2006.01)i; G01S17/08(2006.01)i; G01S7/48(2006.01)i; G01S7/481(2006.01)i; G01B11/00(2006.01)i

According to International Patent Classification (IPC) or to both national classification and IPC

| B. | FIELDS SEARCHED |
| --- | --- |

Minimum documentation searched (classification system followed by classification symbols)

IPC: G01C G01S G01B

Documentation searched other than minimum documentation to the extent that such documents are included in the fields searched

Electronic data base consulted during the international search (name of data base and, where practicable, search terms used)

CNTXT; WPABSC; ENTXTC; CNKI; VEN; WPABS; ENTXT: 摄影, 摄像, 激光, 测距, 测量, 导航, 坐标, 转换, 参考, 参照, GPS, GNSS, photography, imaging, laser, ranging, measurement, navigation, coordinate, conversion, reference

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115096269 A (SHANGHAI JINGRONG NETWORK TECHNOLOGY CO., LTD.) 23 September 2022 (2022-09-23)<br>description, paragraphs [0058]-[0150], and figures 1-3 | 1-16 |
| A | CN 109239725 A (XAG CO., LTD.) 18 January 2019 (2019-01-18)<br>entire document | 1-16 |
| A | CN 113048955 A (THE 7TH ENGINEERING CO., LTD. OF CHINA RAILWAY 12TH BUREAU GROUP et al.) 29 June 2021 (2021-06-29)<br>entire document | 1-16 |
| A | JP 2016080572 A (AERO ASAHI CORP.) 16 May 2016 (2016-05-16)<br>entire document | 1-16 |
| A | KR 101896061 B1 (SAM AH AERIAL SURVEY CO., LTD.) 06 September 2018 (2018-09-06)<br>entire document | 1-16 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 April 2024** | **15 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/125169** |

| Patent document cited in search report | | | Publication date (day/month/year) | Patent family member(s) | Publication date (day/month/year) |
| --- | --- | --- | --- | --- | --- |
| CN | 115096269 | A | 23 September 2022 | None | |
| CN | 109239725 | A | 18 January 2019 | None | |
| CN | 113048955 | A | 29 June 2021 | None | |
| JP | 2016080572 | A | 16 May 2016 | None | |
| KR | 101896061 | B1 | 06 September 2018 | None | |

Form PCT/ISA/210 (patent family annex) (July 2022)